Europäisches Patentamt

European Patent Office

Office européen des brevets

(19)

(11) Veröffentlichungsnummer : **0 146 096**
**B1**

(12) EUROPÄISCHE PATENTSCHRIFT

(45) Veröffentlichungstag der Patentschrift :
05.04.89

(51) Int. Cl.⁴ : **B 23 Q 7/02**, B 23 Q 1/14

(21) Anmeldenummer : **84114966.9**

(22) Anmeldetag : **08.12.84**

(54) **Hub-Drehtisch-Vorrichtung.**

(30) Priorität : **12.12.83 DE 3344805**

(43) Veröffentlichungstag der Anmeldung :
**26.06.85 Patentblatt 85/26**

(45) Bekanntmachung des Hinweises auf die Patenterteilung : **05.04.89 Patentblatt 89/14**

(84) Benannte Vertragsstaaten :
**BE FR GB IT**

(56) Entgegenhaltungen :
**DE--A-- 2 551 804**
**US--A-- 4 313 260**
**IBM TECHNICAL DISCLOSURE BULLETIN, Band 17,
Nr. 2, Juli 1974, Seiten 418,419, New York, US; A.
MACK: "External carrier transfer mechanism"**

(73) Patentinhaber : **EXPERT Maschinenbau GmbH
Seehofstrasse 56-58
D-6143 Lorsch (DE)**

(72) Erfinder : **Möller, Reinfried
Siegfriedstrasse 27/1
D-6940 Weinheim (DE)**

(74) Vertreter : **Helber, Friedrich G., Dipl.-Ing.
Giesser Weg 47
D-6144 Zwingenberg (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft eine Hub-Drehtisch-Vorrichtung mit einem Drehtisch mit einer durch einen Schrittantrieb nach einem vorgegebenen Bewegungsgesetz drehantreibbaren Tischplatte, auf welcher eine Hubvorrichtung aufgebaut ist.

Drehtische mit durch einen Schrittantrieb taktweise über vorgegebene Winkelbeträge antreibbarer Tischplatte sind bekannt und dienen beispielsweise in Bearbeitungsstraßen zur taktweisen Übernahme von Werkstücken an eine Aufnahmeposition, stoß- und ruckfreien Überführung in eine (oder mehrere) exakt winkelversetzte Bearbeitungsposition(en) und schließlich zum Weitertransport zu einer Abgabeposition, an welcher die Werkstücke wieder übernommen und weitertransportiert werden. Da die Tischplatte in einer horizontalen Ebene bewegt wird, müssen diese Positionen sämtlich in einer Ebene liegen. Sollen Werkstücke von einer Position in nicht nur winkel-, sondern auch höhenversetzte Positionen geführt werden, muß der getakteten Drehbewegung der Tischplatte eine ebenfalls stoß- und ruckfreie Hubbewegung mit exakter Höhenpositionierung überlagert werden.

Der Erfindung liegt daher die Aufgabe zugrunde, eine Hub-Drehtisch-Vorrichtung zu schaffen, welche solche überlagerten getakteten Dreh-Hubbewegungen mit der erforderlichen Genauigkeit auszuführen erlaubt.

Erfindungsgemäß wird diese Aufgabe bei einer Vorrichtung der eingangs erwähnten Art dadurch gelöst, daß die Hubvorrichtung einen auf der drehantreibbaren Tischplatte drehfest aufgesetzten, in senkrechter Richtung auf und ab beweglich geführten Hubschlitten aufweist, mit dem ein am starren Teil des Drehtischs undrehbar gehalterter, in senkrechter Richtung auf und ab beweglich geführter Indexschlitten in Hubrichtung in Mitnahmeverbindung steht, und daß der Indexschlitten wenigstens einen, rechtwinklig zur Hubrichtung vorstehenden Indexbolzen aufweist, der in eine in die Umfangsfläche einer senkrecht angeordneten, drehantreibbaren Zylinderwalze eingearbeitete Indexnut eingreift. Durch die Ausbildung des Hubantriebes als Schrittantrieb mit einer vom Verlauf einer Umfangsnut in einer Zylinderwalze abgeleiteten Bewegungscharakteristik sind die Hub-Endstellungen in Abhängigkeit vom Verlauf der Umfangsnut unter wählbaren Geschwindigkeits- und Beschleunigungsbedingungen exakt anfahrbar.

Der Hubschlitten wird zweckmäßig auf einem von einer Anzahl von in gleichmäßigen Winkelabständen zueinander versetzt auf der drehantreibbaren Tischplatte befestigten senkrechten Säulen gebildeten Hubgestell geführt, deren tischplattenabgewandte freie Enden noch durch eine horizontale Querplatte starr miteinander verbunden sein können, um das Hubgestell möglichst starr auszubilden.

Vorteilhaft ist beispielsweise eine Ausgestaltung, bei welcher das Hubgestell drei Führungssäulen aufweist.

Der Hubschlitten seinerseits weist dann je eine auf jeder Führungssäule längsverschieblich angeordnete Führungshülse auf, welche am Umfange eines horizontalen Trägerrings befestigt sind, welcher somit sicherstellt, daß sich die Führungshülsen nur gleichzeitig und synchron auf den Führungssäulen verschieben können.

Am Trägerring und/oder den Führungshülsen können dann radial vorstehende Ausleger angesetzt sein, an deren Enden die Aufnahme für die von Position zu Position zu verbringenden Werkstücke vorgesehen sind. Anstelle der einzelnen Ausleger kann auch eine umlaufende, kreisringförmige Transportscheibe vorgesehen werden, auf welcher dann die Aufnahmen oder Halterungen für die Werkstücke angeordnet sind.

In einer bevorzugten Ausführungsform der Erfindung ist der Indexschlitten auf einem von wenigstens drei in gleichen Winkelabständen zueinander versetzten und an ihren beiden Enden durch horizontale Querplatten starr miteinander verbundenen Säulen gebildeten Index-Traggestell geführt, welches undrehbar mittig innerhalb des Hubgestells angeordnet ist.

Vorzugsweise weist der Indexschlitten drei längsverschieblich auf den zugeordneten Gestell-Säulen gelagerte Führungsschlitten auf, von denen jeder je einen radial nach innen vorspringenden Indexbolzen aufweist, wobei mittig innerhalb des Index-Traggestells eine Zylinderwalze mit drei um jeweils 120° zueinander versetzten Indexnuten gleicher Steigungscharakteristik angeordnet ist, in welche die Indexbolzen eingreifen. Die Verwendung einer dreigängigen Zylinderwalze erlaubt also einen absolut synchronen und gleichzeitigen Antrieb der drei, den Indexschlitten bildenden Führungsschlitten mit nur einer zentral angeordneten Zylinderwalze. Eine zusätzliche starre Verbindung der Führungsschlitten — etwa durch einen dem Trägerring des Hubschlittens entsprechenden ringförmigen Bauteil — ist also nicht erforderlich.

Die Koppelung der Führungsschlitten mit dem Hubschlitten erfolgt dadurch, daß der Trägerring des Hubschlittens die Querschnittsform eines um 90° gekippten U hat, dessen Quersteg an den Führungshülsen befestigt ist, während die U-Schenkel vom Quersteg radial nach innen weisen, und daß von jedem Führungsschlitten je ein Hubbolzen zwischen die U-Schenkel des Trägerrings vorspringt. Während die Hubbolzen der Führungsschlitten den Trägerring — und somit den Hubschlitten — in Hubrichtung zwangsläufig mitnehmen, ist eine Drehkoppelung des Hubschlittens mit dem Indexschlitten nicht gegeben.

Auf den freien Enden der Hubbolzen ist zweckmäßig je eine Rolle drehbar gelagert, deren Durchmesser im wesentlichen gleich dem lichten Abstand zwischen den Innenflächen der U-Schenkel des Trägerrings ist.

Um die starre Anordnung des Index-Traggestells über der drehantreibbaren Tischplatte des Drehtischs zu ermöglichen, kann in der drehantreibbaren Tischplatte eine mittige Durchgangsöffnung vorgesehen sein, die von einem von der tischplattenzugewandten Unterseite der unteren Querplatte des Index-Traggestells vorstehenden, mit dem Gestell des Drehtischs starr verbundenen Ständer durchsetzt wird.

Die die Hubbewegung steuernde Zylinderwalze ist zweckmäßig mittels mittig axial von ihren Stirnflächen vortretenden Lagerzapfen in Lagern in der oberen und unteren Querplatte des Index-Traggestells drehbar gelagert, wobei dann auf der Oberseite der drehtischabgewandten oberen Querplatte ein Antriebsmotor angeordnet ist, dessen Antriebswelle direkt oder indirekt über ein zwischengeschaltetes Untersetzungsgetriebe mit dem in der oberen Querplatte gelagerten Lagerzapfen der Zylinderwalze gekoppelt ist.

Die Erfindung ist in der folgenden Beschreibung eines Ausführungsbeispiels in Verbindung mit der Zeichnung näher erläutert, und zwar zeigt:

Fig. 1 eine schematische Darstellung einer erfindungsgemäßen Hub-Drehtisch-Vorrichtung im Schnitt, entlang der Linie 1-1 in Fig. 2;

Fig. 2 eine Schnittansicht der Hub-Drehtisch-Vorrichtung, gesehen in Richtung der Pfeile 2-2 in Fig. 1; und

Fig. 3 eine Abwicklung des Umfangs der Zylinderwalze des Hubantriebs der Hub-Drehtisch-Vorrichtung.

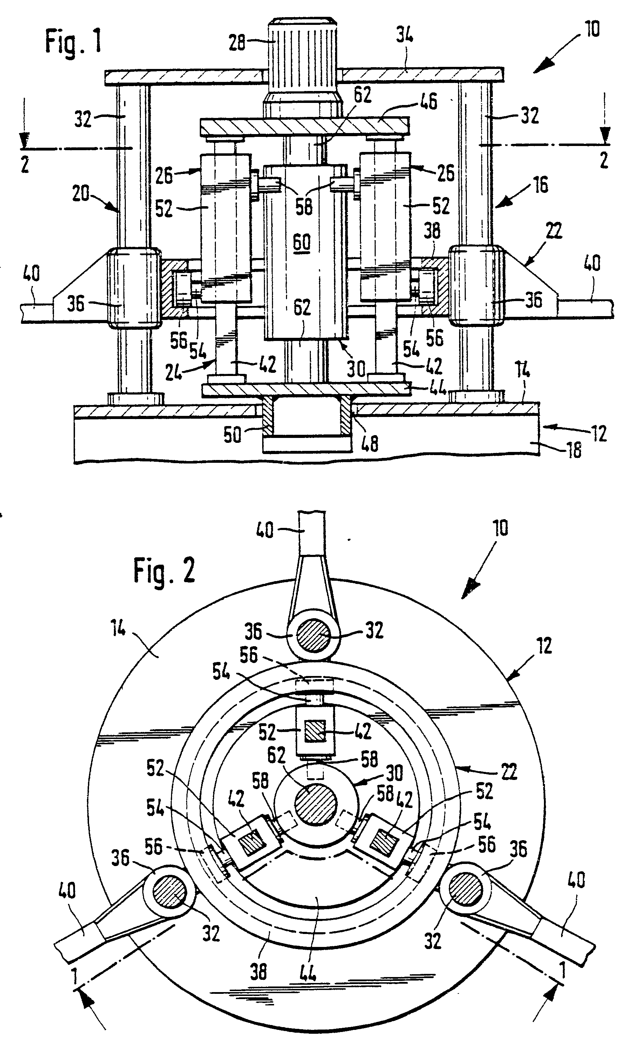

In den Figuren 1 und 2 ist eine in ihrer Gesamtheit mit 10 bezeichnete erfindungsgemäße Hub-Drehtisch-Vorrichtung gezeigt, die sich aus einem durch einen Schrittantrieb taktweise um vorgegebene Winkelbeträge drehantreibbaren Drehtisch 12 und einer auf dessen Tischplatte 14 aufgesetzten Hubvorrichtung 16 zusammensetzt. Drehtische mit Schrittantrieben sind bekannt, so daß in den Zeichnungsfiguren nur die Tischplatte 14 dargestellt ist, die drehbar auf dem im übrigen nur schematisch angedeuteten ruhenden Drehtisch-Gestell 18 gelagert ist.

Die Hubvorrichtung 16 setzt sich aus drei Baugruppen zusammen, nämlich einem drehfest auf der ihrerseits drehantreibbaren Tischplatte 14 angeordneten Hubgestell 20, welches einen in senkrechter Richtung verschiebbaren Hubschlitten 22 trägt, einem innerhalb des Hubgestells 20 drehfest mit dem Drehtisch-Gestell 18 verbundenen Index-Gestell 24, welches einen ebenfalls in senkrechter Richtung verschiebbaren Indexschlitten 26 trägt und einer mit senkrechter Drehachse mittig innerhalb des Indexgestells 24 gelagerten und durch einen auf dem Indexgestell gehalterten Getriebemotor 28 unabhängig vom Antrieb des Drehtischs 12 drehantreibbaren Zylinderwalze 30.

Das Hubgestell 20 besteht im dargestellten Fall aus drei in gleichen Winkelabständen auf dem gleichen Durchmesser auf der Oberseite der Tischplatte 14 aufgeschraubten (oder in anderer Weise befestigten) senkrechten Führungssäulen 32 mit kreisförmigem Querschnitt, die durch eine auf ihrer oberen freien Stirnfläche aufgesetzte Querplatte 34 starr miteinander verbunden sind. Der Hubschlitten 22 wird von drei jeweils auf einer der Führungssäulen 32 höhenverschieblich geführten Führungshülsen 36 gebildet, die jeweils auf der Außenfläche eines horizontalen Trägerrings 38 starr befestigt, z. B. aufgeschweißt sind, so daß sie nur gemeinsam mit dem Trägerring 38 auf den Führungssäulen 32 verschiebbar sind. Als Werkstückhalterung ist im gezeigten Fall an jeder Führungshülse 36 je ein waagerecht radial nach außen vorspringender Ausleger 40 angesetzt, wobei angenommen ist, daß die Trägerplatte 14 des Drehtischs 12 bei jedem Drehschritt einen Winkel von 120° zurücklegt. Falls der Schrittantrieb des Drehtischs 12 auf Drehschritte von geringeren Winkelstreckungen, z. B. je 90° oder je 72° ausgelegt ist, kann das Hubgestell entweder aus vier oder fünf in gleichmäßigen Winkelabständen angeordneten Führungssäulen aufgebaut werden, wobei der Hubschlitten dann ebenfalls mit vier oder fünf Führungshülsen auf den Führungssäulen geführt und an jeder Führungshülse ein Ausleger angesetzt ist, oder die Ausleger 40 werden in einer dem Drehwinkel des Drehtischs entsprechenden Anzahl und Lage versetzt am entsprechend steif ausgebildeten Trägerring 38 angesetzt. Anstelle einzelner Ausleger kann natürlich auch eine ringförmig geschlossene horizontale Trägerplatte an den Führungshülsen 36 und/ oder dem Trägerring 38 befestigt oder auf die Ausleger 40 aufgesetzt werden.

Das Indexgestell 24 wird von drei innerhalb des Hubgestells 20 in gleichmäßigen Winkelabständen angeordneten Säulen 42 gebildet, deren untere und obere Stirnflächen jeweils wiederum durch je eine horizontale Querplatte 44 bzw. 46 starr miteinander verbunden sind. Ein mittig von der Unterseite der unteren Querplatte 44 vortretender, eine Mittelöffnung 48 in der Tischplatte 14 durchsetzender Ständer 50 ist starr im Drehtisch-Gestell 18 verankert. Auf den im Querschnitt quadratischen Säulen 42 ist jeweils ein Führungsschlitten 52 längsverschieblich und — infolge des quadratischen Querschnitts — unverdrehbar gelagert. Von den dem Trägerring 38 zugewandten Außenflächen der Führungsschlitten 52 tritt jeweils ein Hubbolzen 54 vor, auf dem jeweils eine Rolle 56 drehbar gelagert ist. Der Trägerring 38 hat die Querschnittsform eines um 90° gekippten U, von dessen senkrecht stehendem Quersteg aus die beiden U-Schenkel radial nach innen weisen, wobei der lichte Abstand zwischen den Innenflächen der U-Schenkel etwa gleich dem Durchmesser der Rollen 56 bemessen ist. Die mit ihrer Umfangsfläche zwischen die U-Schenkel eingreifenden Rollen ermöglichen also eine Verdrehung des Hubschlittens 22 relativ zu dem von den drei Führungsschlitten 52 gebildeten Indexschlitten 26, während in Richtung der senkrechten Hubbewegung der Hub- und der Indexschlitten zwangsläufig miteinander gekoppelt sind. Die Führungsschlitten 52 sind durch den Eingriff der Rolle 56 in den Trägerring 38 nur gleichzeitig und synchron zusammen mit dem Hubschlitten 22 in Höhenrichtung verschiebbar, d. h. ein die Führungsschlitten 52 starr zu einem einstückigen Indexschlitten verbindender, dem Trägerring 38 des Hubschlittens 22 entsprechender Bauteil ist nicht erforderlich.

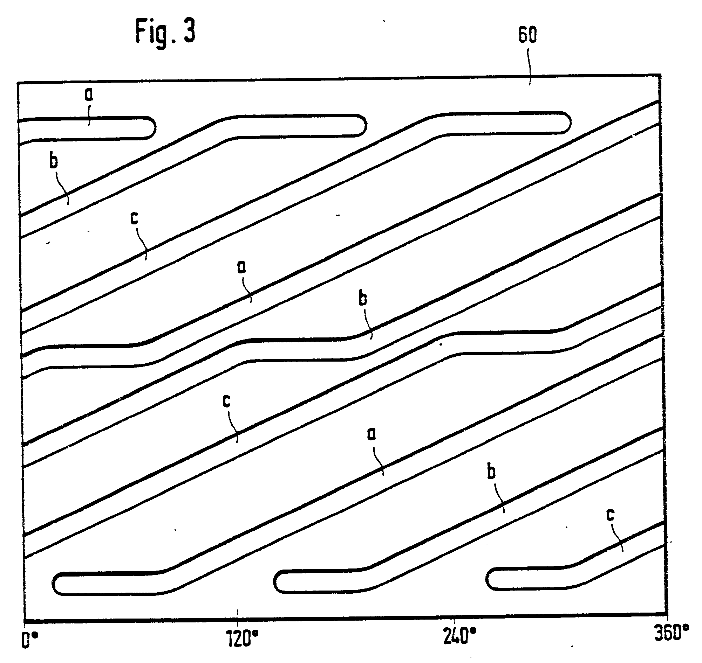

Jeder Führungsschlitten 52 ist außerdem mit je einem waagerecht radial nach innen vorspringenden Indexbolzen 58 versehen, deren freies Ende jeweils in eine Indexnut a, b, c (Fig. 3) in der Umfangsfläche 60 der Zylinderwalze 30 vorsteht, wobei die Zylinderwalze mit drei um jeweils 120° zueinander versetzten Indexnuten gleicher Steigungscharakteristik versehen ist, d. h. die Indexbolzen 58 jeweils in eine gesonderte Indexnut eingreifen.

Durch mittig axial von ihren Stirnflächen vortretende Lagerzapfen 62 ist die Zylinderwalze in der oberen und unteren Querplatte 46, 44 des Index-Traggestells 24 drehbar gelagert. Der auf der Oberseite der oberen Querplatte 46 aufgeflanschte Getriebemotor 28 ist mit dem in der oberen Querplatte gelagerten Lagerzapfen 62 der Zylinderwalze gekoppelt, so daß sich die Zylinderwalze bei laufendem Motor 28 dreht. Abhängig von der Steigung der Indexnuten a, b, c verschieben sich dann die Indexbolzen 58 und somit auch die insgesamt den Indexschlitten 26 bildenden Führungsschlitten 52, die ihrerseits wiederum den Hubschlitten 22 in senkrechter Richtung mitnehmen. Eine Überlagerung der Hubbewegung durch gleichzeitigen Antrieb der Tischplatte 14 des Drehtischs 12 ist dabei jedoch ohne weiteres möglich.

Der Geschwindigkeits- und Beschleunigungsverlauf der Hubbewegung des Hubschlittens 22 ist also letztlich durch den Verlauf der Indexnuten a, b, c der Zylinderwalze 60 bestimmt. In Fig. 3 ist schematisch die Abwicklung des Umfangs 60 der Zylinderwalze 30 veranschaulicht, bei welcher die jeweils um 120° in Umfangsrichtung versetzten Indexnuten gleichen Verlaufs an ihrem unteren und oberen und in einem dazwischenliegenden Abschnitt einen in Umfangsrichtung verlaufenden Abschnitt aufweisen. Solange die Indexbolzen 58 bei der Drehung der Zylinderwalze in diesen, in Umfangsrichtung verlaufenden Abschnitten der Indexnuten stehen, erfolgt ersichtlich keine Höhenveränderung der Führungsschlitten 52 und somit des Hubschlittens 22. Erst beim Übertritt der Bolzen 58 in die schräg geneigt verlaufenden Indexnut-Abschnitten erfolgt eine Höhenverschiebung der Indexbolzen, welche über die Führungsschlitten 52 in die gewünschte Hubbewegung des Hubschlittens 22 umgesetzt wird. Der in Fig. 3 schematisch dargestellte Verlauf der Indexnuten a, b, c, hat beispielsweise — infolge des in halber Höhe der Zylinderwalze vorgesehenen, in Umfangsrichtung verlaufenden Indexnut-Abschnitts — eine zweistufige Hubbewegung des Hubschlittens mit einer Stillstandsposition in halber Höhe zur Folge.

## Patentansprüche

1. Hub-Drehtisch-Vorrichtung (10) mit einem Drehtisch (12) mit einer durch einen Schrittantrieb nach einem vorgegebenen Bewegungsgesetzt drehantreibbaren Tischplatte (14), auf welcher eine Hubvorrichtung (16) aufgebaut ist, dadurch gekennzeichnet, daß die Hubvorrichtung (16) einen auf der drehantreibbaren Tischplatte (14) drehfest aufgesetzten, in senkrechter Richtung auf und ab beweglich geführten Hubschlitten (22) aufweist, mit dem ein am starren Teil des Drehtischs (12) undrehbar gehalterter, in senkrechter Richtung auf und ab beweglich geführter Indexschlitten (26) in Hubrichtung in Mitnahmeverbindung steht, und daß der Indexschlitten (26) wenigstens einen rechtwinklig zur Hubrichtung vorstehenden Indexbolzen (58) aufweist, der in eine in die Umfangsfläche (60) einer senkrecht angeordneten drehantreibbaren Zylinderwalze (30) eingearbeitete Indexnut (a, b, c) eingreift.

2. Hub-Drehtisch-Vorrichtung nach Anspruch 1, dadurch gekennzeichnet, daß der Hubschlitten (22) auf einem von einer Anzahl von in gleichmäßigen Winkelabständen zueinander versetzt auf der drehantreibbaren Tischplatte (14) befestigten senkrechten Säulen (32) gebildeten Hubgestell (20) geführt ist.

3. Hub-Drehtisch-Vorrichtung nach Anspruch 2, dadurch gekennzeichnet, daß die tischplattenabgewandten oberen freien Enden der Säulen (32) durch eine horizontale Querplatte (34) starr miteinander verbunden sind.

4. Hub-Drehtisch-Vorrichtung nach Anspruch 2 oder 3, dadurch gekennzeichnet, daß das Hubgestell (20) drei Führungssäulen (32) aufweist.

5. Hub-Drehtisch-Vorrichtung nach einem der Ansprüche 2 bis 4, dadurch gekennzeichnet, daß der Hubschlitten (22) je eine auf jeder Führungssäule (32) längsverschieblich angeordnete Führungshülse (36) aufweist, und daß die Führungshülsen (36) am Umfang eines horizontal gelagerten Trägerrings (38) befestigt sind.

6. Hub-Drehtisch-Vorrichtung nach Anspruch 5, dadurch gekennzeichnet, daß am Trägerring (38) und/oder den Führungshülsen (36) radial vorstehende Ausleger (40) angesetzt sind.

7. Hub-Drehtisch-Vorrichtung nach einem der Ansprüche 2 bis 6, dadurch gekennzeichnet, daß der Indexschlitten (26) auf einem von wenigstens drei in gleichmäßigen Winkelabständen zueinander versetzten und an ihren beiden Enden durch horizontale Querplatten (44 ; 46) starr miteinander verbundenen Säulen (42) gebildeten Index-Traggestell (24) geführt ist, welches undrehbar mittig innerhalb des Hubgestells (20) angeordnet ist.

8. Hub-Drehtisch-Vorrichtung nach Anspruch 7, dadurch gekennzeichnet, daß der Indexschlitten (26) drei in gleichmäßigen Winkelabständen auf den zugeordneten Gestell-Säulen (42) gelagerte Führungsschlitten (52) aufweist, von denen jeder je einen radial nach innen vorspringenden Indexbolzen (58) aufweist, und daß die mittig innerhalb des Index-Traggestells (24) angeordnete Zylinderwalze (30) mit drei um jeweils 120° zueinander versetzten Indexnuten (a, b, c) gleicher Steigungscharakteristik versehen ist, in welche die Indexbolzen (58) eingreifen.

9. Hub-Drehtisch-Vorrichtung nach Anspruch 5 und Anspruch 8, dadurch gekennzeichnet, daß der Trägerring (38) die Querschnittsform eines um 90° gekippten U hat, dessen Quersteg an den Führungshülsen (36) befestigt ist, während die U-Schenkel vom Quersteg radial nach innen weisen, und daß von jedem Führungsschlitten (52) je ein Hubbolzen (54) zwischen die U-Schenkel des Trägerrings (38) vorspringt.

10. Hub-Drehtisch-Vorrichtung nach Anspruch 9, dadurch gekennzeichnet, daß auf den freien Enden der Hubbolzen (54) je eine Rolle (56) drehbar gelagert ist, deren Durchmesser im wesentlichen gleich dem lichten Abstand zwischen den Innenflächen der U-Schenkel des Trägerrings (38) ist.

11. Hub-Drehtisch-Vorrichtung nach einem der Ansprüche 8 bis 10, dadurch gekennzeichnet, daß in der drehantreibbaren Tischplatte (14) eine mittige Durchgangsöffnung (48) vorgesehen ist, und daß die Durchgangsöffnung (48) von einem von der tischplattenzugewandten Unterseite der unteren Querplatte (44) des Index-Traggestells (24) vorstehenden, mit dem Gestell (18) des Drehtischs (12) starr verbundenen Ständer (50) durchsetzt wird.

12. Hub-Drehtisch-Vorrichtung nach Anspruch 7 oder 8, dadurch gekennzeichnet, daß die Zylinderwalze (30) mittels mittig axial von ihren Stirnflächen vortretenden Lagerzapfen (62) in Lagern in der oberen und unteren Querplatte (46 ; 44) des Index-Traggestells (24) drehbar gelagert ist, und daß auf der Oberseite der drehtischabgewandten oberen Querplatte (46) ein Antriebsmotor (28) angeordnet ist, dessen Antriebswelle direkt oder indirekt über ein zwischengeschaltetes Untersetzungsgetriebe mit dem in der oberen Querplatte (46) gelagerten Lagerzapfen (62) der Zylinderwalze (30) gekoppelt ist.

**Claims**

1. Lifting-turntable device (10), having a swiveling table (12) with a table plate (14) which can be rotated by a stepping drive according to a given law of motion and on which a lifting mechanism (16) is constructed, characterized in that the lift mechanism (16) has a lift slide (22) movably guided up and down in the vertical direction and placed corotationally on the rotatable table plate (14), with which an indexing slide (26) mounted unrotatably on the rigid part of the swiveling table (12) and guided up and down in the vertical direction is in driving association in the lift direction, and that the indexing slide (26) has at least one indexing pin (58) projecting at right angles to the lift direction, which engages an indexing groove (a, b, c) made in the circumferential surface (60) of a vertically disposed cylinder (30) which can be driven in rotation.

2. Lifting-turntable device according to claim 1, characterized in that the lift slide (22) is guided on a lift frame (20) formed by a number of vertical columns (32) fastened offset from one another at uniform angular intervals on the rotationally drivable table plate (14).

3. Lifting-turntable device according to claim 2, characterized in that the table-plate-remote upper free ends of the columns (32) are joined rigidly together by a horizontal cross plate (34).

4. Lifting-turntable device according to claim 2 or 3, characterized in that the lift frame (20) has three guiding columns (32).

5. Lifting-turntable device according to any of claims 2 to 4, characterized in that the lift slide (22) has a guiding sleeve (36) disposed for longitudinal displacement on each guiding column (32), and that the guiding sleeves (36) are fastened to the periphery of a horizontally mounted supporting ring (38).

6. Lifting-turntable device according to claim 5, characterized in that radially projecting arms (40) are made on the supporting ring (38) and/or on the guiding sleeves (36).

7. Lifting-turntable device according to any of claims 2 to 6, characterized in that the indexing slide (26) is guided on an indexing support frame (24) which is formed by at least three columns (42) joined rigidly together at both ends by horizontal cross plates (44 ; 46) and set apart from each other at uniform angular intervals, and which is disposed nonrotatably centrally inside of the lift frame (20).

8. Lifting-turntable device according to claim 7, characterized in that the indexing slide (26) has three guiding slides (52) mounted at uniform angular intervals on the associated frame columns (42), each of which has an indexing pin (58) projecting radially inwardly, and that the cylinder (30) disposed centrally within the index support frame (24) is provided with three index grooves (a, b, c) of equal pitch characteristic offset 120° from one another, into which the indexing pins (58) engage.

9. Lifting-turntable device according to claim 5 and claim 8, characterized in that the support ring (38) has the cross-sectional shape of a U tipped at 90°, whose web is fastened to the guiding sleeves (36), while the U-limbs point radially inwardly from the web, and that one lift pin (54) projects from each guiding slide (52) between the U-limbs of the support ring (38).

10. Lifting-turntable device according to claim 9, characterized in that, on each of the free ends of the lift pins (54), one roller (56) is rotatably mounted, whose diameter is substantially equal to the clear distance between the inside faces of the U-limbs of the support ring (38).

11. Lifting-turntable device according to any one of claims 8 to 10, characterized in that a central passage opening (48) is provided in the rotationally drivable table plate (14), and that the passage opening (48) accommodates a base piece (50) rigidly joined to the frame (18) of the swiveling table (12) and projecting from the table-plate-facing bottom of the lower cross plate (44) of the index support frame (24).

12. Lifting-turntable device according to claim 7 or 8, characterized in that the cylinder (30) is journaled by means of pivots (62) projecting axially from its end faces, in bearings in the upper and lower cross plate (46 ; 44) of the index support frame (24), and that, on the upper side of the upper cross plate (46) remote from the swiveling table, a drive motor (28) is disposed whose drive shaft is coupled directly, or indirectly through an interposed reducing gear, to the pivot (62) of the cylinder (30) that is journaled in the upper cross plate (46).

**Revendications**

1. Dispositif à table levante et tournante (10), comportant une table tournante (12) à plateau de table (14) susceptible d'être entraîné en rotation au moyen d'un entraînement pas à pas, selon une loi de mouvement prédéterminée, plateau sur lequel est monté un moyen de levage (16), caractérisé par le fait que le moyen de levage (16) comprend un coulisseau de levage (22) monté bloqué en rotation sur le plateau de table (14) entraînable en rotation, guidé verticalement mobile, vers le haut et vers le bas, coulisseau auquel est relié un coulisseau de positionnement (26) maintenu fixe en rotation sur la partie immobile de la table tournante (12), guidé verticalement mobile, vers le haut et vers le bas, en liaison d'entraînement dans le sens de la course, et le coulisseau de positionnement (26) comprend au moins une tige de positionnement (58), en saillie à angle droit par rapport à la direction du levage, en prise sur une gorge de positionnement (a, b, c) usinée dans la surface périphérique (60) d'un rouleau cylindrique (30) entraînable en rotation (30) disposé verticalement.

2. Dispositif à table levante et tournante selon la revendication 1, caractérisé par le fait que le coulisseau de levage (22) est déplacé d'un certain nombre d'intervalles angulaires régulièrement espacés entre eux et guidé sur le bâti de levage (20) formé par des colonnes verticales (32) fixées sur le plateau de table (14) entraînable en rotation.

3. Dispositif à table levante et tournante selon la revendication 2, caractérisé par le fait que les extrémités libres supérieures des colonnes (32) opposées au plateau de table sont reliées ensemble rigidement par une plaque transversale horizontale (34).

4. Dispositif à table levante et tournante selon la revendication 2 ou 3, caractérisé par le fait que le bâti de levage (20) comprend trois colonnes de guidage (32).

5. Dispositif à table levante et tournante selon l'une des revendications 2 à 4, caractérisé par le fait que le coulisseau de levage (22) comprend une douille de guidage (36) disposée mobile longitudinalement sur chaque colonne de guidage (36) et les douilles de guidage (36) sont fixées à la périphérie d'un anneau support (38) monté horizontalement.

6. Dispositif à table levante et tournante selon la revendication 5, caractérisé par le fait que des bras en saillie radialement (40) sont disposés sur l'anneau support (38) et/ou les douilles de guidage (36).

7. Dispositif à table levante et tournante selon l'une des revendications 2 à 6, caractérisé par le fait que le coulisseau de positionnement (26) est guidé sur un bâti support de positionnement (24) formé d'au moins trois colonnes (42) mutuellement décalées à intervalles angulaires égaux, rigidement reliées ensemble à leurs deux extrémités par des plaques transversales (44 ; 46), bâti support de positionnement disposé fixe en rotation au centre du bâti de levage (20).

8. Dispositif à table levante et tournante selon la revendication 7, caractérisé par le fait que le coulisseau de positionnement (26) comprend trois coulisseaux de guidage (52) montés à intervalles angulaires réguliers sur les colonnes de bâti (42) leur étant affectées, coulisseaux de guidage dont chacun comprend une tige de positionnement (58) saillant radialement vers l'intérieur, et le rouleau cylindrique (30) disposé au centre du bâti support de positionnement (24) est pourvu de trois gorges de positionnement (a, b, c) décalées chacune de 120°, dans lesquelles les tiges de positionnement (58) viennent en prise.

9. Dispositif à table levante et tournante selon la revendication 5 et la revendication 8, caractérisé par le fait que l'anneau support (38) possède une section en forme de U renversé de 90°, dont la nervure transversale est fixée aux douilles de guidage (36), tandis que les ailes de U sont tournées radialement vers l'intérieur de la nervure transversale, et une tige de levage (54) émerge de chaque coulisseau de guidage (52), entre les ailes de U de l'anneau support (38).

10. Dispositif à table levante et tournante selon la revendication 9, caractérisé en ce qu'un galet (56) est monté tournant sur l'extrémité libre de chaque tige de levage (54), galet dont le diamètre est sensiblement égal à l'écart entre les surfaces intérieures des ailes de U de l'anneau support (38).

11. Dispositif à table levante et tournante selon l'une des revendications 8 à 10, caractérisé par le fait qu'un orifice de passage central (48) est prévu dans le plateau de table (14) entraînable en rotation, et l'orifice de passage (48) est traversé par un support (50) émergeant du côté inférieur tourné vers le plateau de table de la plaque transversale inférieure (44) du bâti support de positionnement (24), support relié rigidement au bâti (18) de la table tournante (12).

12. Dispositif à table levante et tournante selon la revendication 7 ou 8, caractérisé par le fait que le rouleau cylindrique (30) est monté tournant au moyen de tourillon de palier (62) avançant au centre de leurs surfaces frontales, dans des paliers situés dans la plaque transversale supérieure et inférieure (46 ; 44) du bâti support de positionnement (24), et un moteur d'entraînement (28) est disposé sur le côté supérieur de la plaque transversale supérieure (46) tournée du côté supérieur du plan de table tournante, moteur dont l'arbre d'entraînement est directement ou indirectement accouplé par une transmission réductrice au tourillon de palier (62) du rouleau cylindrique (30) monté dans la plaque transversale supérieure (46).

Fig. 1

Fig. 2

Fig. 3